# EUROPÄISCHE PATENTSCHRIFT

(11) **EP 0 649 000 B1**
(45) Veröffentlichungstag und Bekanntmachung des Hinweises auf die Patenterteilung: **10.12.1997**
(21) Anmeldenummer: 94115019.5
(22) Anmeldetag: 23.09.1994
(51) Int. Cl.: G01B 11/16, G01M 11/08, G01D 5/353

(54) **Messeinrichtung zur Überwachung von Bauwerken, Geländebereichen oder dergleichen**
Measuring-device to control buildings, fields etc.
Dispositif de mesure de surveillance pour des édifices, des terrains etc.

(30) Priorität: 24.09.1993 DE 4332621
(43) Veröffentlichungstag der Anmeldung: 19.04.1995
(73) Patentinhaber: Osmos Deha-Com B.V., 3001 AE Rotterdam (NL)
(72) Erfinder: Lessing, Rainer, Dr. rer. nat., D-51491 Overath (DE)
(74) Vertreter: Eder, Thomas, Dr.-Ing.

(56) Entgegenhaltungen:
- DE-A- 3 506 844
- DE-A- 3 902 997
- FR-A- 2 692 038
- ADVANCES IN INSTRUMENTATION, Bd.42, Nr.3, 1987, RESEARCH TRIANGLE PARK, NC, USA Seiten 1241 - 1250 N. LAGAKOS, J.A. BUCARO 'Fiber Optic Microbend Sensor'

## Beschreibung

Die Erfindung betrifft eine Meßeinrichtung zur Überwachung von Bauwerken, Geländebereichen oder dgl. mit den Merkmalen des Oberbegriffs des Patentanspruchs 1.

Aus der DE-PS 39 02 997 ist eine Meßeinrichtung zur Überwachung von Bauwerken mit einem Lichtwellenleiter-Biegesensor bekannt. Hierbei besteht der Lichtwellenleiter-Biegesensor durchgehend aus einem Gradienten-Multimode-Lichtwellenleiter GI. Dieser Lichtwellenleiter ist in Form einer Schleife angeordnet. Er besitzt zwei bogenförmige Sensorabschnitte S zwischen zueinander bewegbaren, schlittenförmigen Trägerteilen, deren Trägerplatten mit den zu überprüfenden Bauwerksbereichen verbunden sind. An den Lichtwellenleiter ist an einem Ende eine Lichtquelle und am anderen Ende ein Lichtempfänger mit Auswerteinrichtungen für Lichtdämpfungswerte angeschlossen. Nachteilig ist hierbei, daß eine solche Meßeinrichtung gegebenenfalls zu unempfindlich ist und die Empfindlichkeit auch nicht wesentlich gesteigert werden kann. Dies hängt im wesentlichen damit zusammen, daß bei einem derartigen Lichtwellenleiter nach einer Biegung die Biegeempfindlichkeit geschwächt wird. Bei der beschriebenen Meßeinrichtung erfolgt eine mehrmalige Krümmung des Lichtwellenleiters, demnach ist die Biegeempfindlichkeit stark vermindert.

Andererseits ist ein Step-Index-Lichtwellenleiter bekannt, der eine geringe Biegeempfindlichkeit besitzt. Er eignet sich aber nicht als Lichtwellenleiter für die Sensorstrecke der beschriebenen Meßeinrichtung.

Der Erfindung liegt die Aufgabe zugrunde, eine Meßeinrichtung zur Überwachung von Bauwerken, Geländebereichen oder dgl. zu schaffen, deren Empfindlichkeit erheblich vergrößert ist.

Die Erfindung löst diese Aufgabe mit den kennzeichnenden Merkmalen des Patentanspruches 1.

Die Meßeinrichtung nach der Erfindung besitzt eine erheblich gesteigerte Empfindlichkeit. Dies beruht darauf, daß die Biegeempfindlichkeit des Sensorabschnittes mit Gradienten-Multimode-Lichtwellenleiter durch nachgeschaltete Step-Index-Lichtwellenleiterabschnitte aufrechterhalten wird.

Nach einer Ausgestaltung der Erfindung ist jeder bogenförmige Sensorabschnitt von Umlenkungen geführt, deren Außenflächen einen Biegeradius aufweisen. Die Umlenkungen sind mit den einander zugekehrten Enden der Trägerplatten verbunden. Hierdurch wird der Lichtwellenleiter an der Außenfläche knickungsfrei geführt.

Nach einer weiteren Ausgestaltung der Erfindung weist jede Trägerplatte einen Aufnahmeraum für einen Lichtwellenleiter mit Zuführungen und Ausführungen auf, wobei der Lichtwellenleiter an der Innenwandung des Aufnahmeraumes knickungsfrei und gesichert anliegen kann.

Nach einer weiteren Ausgestaltung der Erfindung kann der Aufnahmeraum für den Lichtwellenleiter konzentrische innere Wandungen für innere Schleifen des Lichtwellenleiters aufweisen.

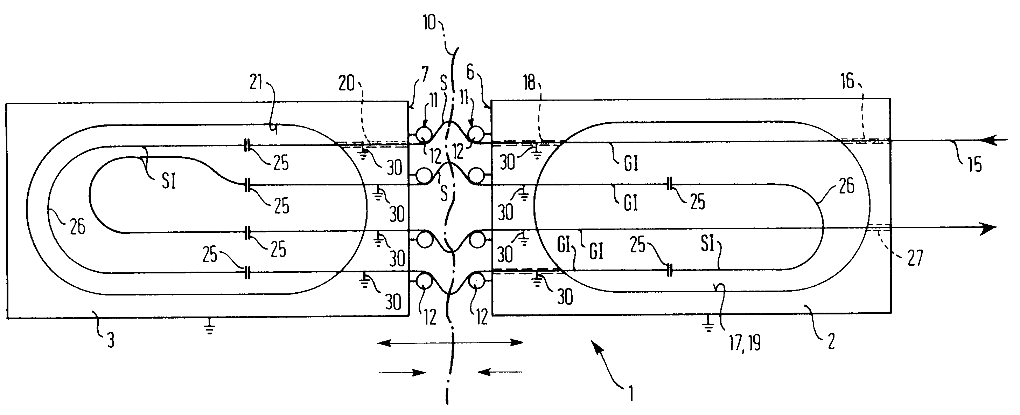

Die Erfindung wird nachfolgend anhand eines in der Zeichnung dargestellten Ausführungsbeispieles näher beschrieben. Die Zeichnung zeigt
eine schematische Draufsicht auf eine Meßeinrichtung nach der Erfindung.

Die in der Zeichnung dargestellte Meßeinrichtung 1 kann bei Bauwerken, Geländebereichen, z.B. Felsabstürzen oder dgl. angewendet werden.

Sie umfaßt zwei Trägerplatten 2, 3. Diese sind fest mit Bauwerksbereichen verbunden, was in der Zeichnung schematisch angedeutet ist. Zwischen den einander zugekehrten Enden 6, 7 der Trägerplatten 2, 3 verläuft die zu überwachende Zone eines Bauwerkes oder z.B. eines Risses 10 im Gelände.

Die Trägerplatte 2, 3 ist vorzugsweise rechteckförmig. Sie besteht aus einem starren Metallkörper.

An den Enden 6, 7 sind beispielsweise je vier zueinander ausgerichtete Umlenkungen 11, z.B. in Form von Zapfen 12 vorgesehen. Die Zapfen 12 sind fest mit den Enden 6, 7 verbunden. Sie besitzen eine einen Biegeradius aufweisende Außenfläche.

Der Lichtwellenleiter 15 ist an eine nicht dargestellte Lichtquelle angeschlossen, die Licht in der angegebenen Pfeilrichtung einspeist. Der Lichtwellenleiter 15 ist vorzugsweise über eine nur strichliert angedeutete Führung 16 einem Aufnahmeraum 17 zugeführt. Der Aufnahmeraum kann z.B., wie dargestellt, ovale Form besitzen. Er wird von einer Ausfräsung in der Trägerplatte 2 gebildet.

Der Lichtwellenleiter 15 kann zwar, wie dargestellt, geradlinig den Aufnahmeraum 17 durchqueren und am anderen Ende geführt über einen Austritt 18 am Trägerplattenende 6 austreten, jedoch ist es vorzuziehen, den Lichtwellenleiter 15 an der Innenwandung 19 des Aufnahmeraumes 17 frei anliegend im Aufnahmeraum gegebenenfalls einmal herumzuführen und erst dann dem Austritt 18 zuzuleiten.

Der Lichtwellenleiter 15 verläuft dann weiter über den Zapfen 12, von dessen Außenwandung geführt, frei in Form einer bogenförmigen Sensorstrecke S zu dem gegenüberliegenden Zapfen 12.

Von dessen Außenfläche mit Biegeradius geführt, tritt der Lichtwellenleiter 15 dann über eine Führung 20 in den Aufnahmeraum 21 der anderen Trägerplatte 3. Im Bereich des Aufnahmeraumes 21 ist der Lichtwellenleiter 15 von dem Typ Gradienten-Lichtwellenleiter (GI) durch einen Spleiß 25 - nur schematisch dargestellt - mit einem Lichtwellenleiter der Art Step-Index-Lichtwellenleiter (SI) verbunden.

Der Lichtwellenleiter 15 ist dann weiter in einer Schleife mit der Umkehrung 26 angeordnet. Er kann auch hier wieder - wie im Aufnahmeraum 17 - an der Wandung des Aufnahmeraums 21 frei anliegend geführt sein. Im abgehenden Schleifenteil ist der Lichtwellenleiter 15 dann wiederum über einen Spleiß 25 mit einem Lichtwellenleiter 15 des Typs GI. Dieser verläuft über eine zweite Sensorstrecke S, die wie beschrieben ausgeführt ist, zurück in den Aufnahmeraum 17 der Trägerplatte 2. Auch hier wird wiederum eine Zuführung vorgesehen. Der Lichtwellenleiter 15 von der Art GI ist im Aufnahmeraum 17 durch den Spleiß 25 mit einem Lichtwellenleiter 15 der Art SI verbunden. Dieser ist mittels einer Umkehrung 26 und einem Spleiß 25 mit einem anschließenden Lichtwellenleiter 15 der Art GI zu einer weiteren Sensorstrecke S geführt. Von dort verläuft der Lichtwellenleiter 15 der Art GI über eine Führung in den Aufnahmeraum 21. Er ist dort über einen Spleiß 25 mit einem anschließenden Lichtwellenleiterabschnitt SI verbunden. Schließlich verläuft über einen weiteren Spleiß 25 der Lichtwellenleiter GI zu einer weiteren Sensorstrecke S zurück in den Aufnahmeraum 17 und von da über eine Ausführung 27 über die Trägerplatte 2 nach außen zu einer nicht dargestellten Lichtempfangs- und Auswerteinheit.

Die inneren Schleifen des Lichtwellenleiters können auch gegen eine nicht dargestellte konzentrische Innenwandung im Aufnahmeraum 17 bis 21 anliegen.

Anstatt, wie dargestellt, den Lichtwellenleiter 15 in einer Doppelschleife zu führen, kann er auch in einer beliebigen Mehrfachschleife geführt werden. Durch die steigende Zahl von Schleifen kann die Meßempfindlichkeit gesteigert werden. Die Grenze wird dadurch gegeben, daß das austretende gedämpfte Licht immer mehr verringert und ggf. teurere Send- und Empfangseinrichtungen eingesetzt werden müssen.

Von Bedeutung ist, daß im Bereich der Sensorstrecke S ein Lichtwellenleiter des Typs GI verwendet wird und daß sich hieran ein Lichtwellenleiterabschnitt des Typs SI anschließt, der die Wirkung des vorausgehenden Lichtwellenleiterabschnittes, in dem durch die Biegung das Licht konzentriert wird, anschließend durch den Lichtwellenleiterabschnitt SI wieder homogen über aen Lichtwellenleiterquerschnitt verteilt wird. Für die Eingangs- und Ausgangsabschnitte des Lichtwellenleiters 15 sind Typen GI zu verwenden.

Beiderseits der Sensorstrecken S ist der Lichtwellenleiter 15 mit den Trägerplatten 2, 3 fest zu verbinden, z.B. durch Kleben. Klebestellen 30 sind schematisch dargestellt.

## Patentansprüche

1. Meßeinrichtung zur Überwachung von Bauwerken, Geländebereichen oder dergleichen,
mit einem Lichtwellenleiter-Biegesensor, der einen Multimode-Lichtwellenleiter (GI) aufweist und in Form einer Schleife angeordnet ist,
mehrere bogenförmige Sensorabschnitte (S) zwischen Trägerplatten (2, 3) aufweist, die gegenüber den Sensorabschnitten (S) mit Bauwerks- bzw. Geländebereichen fest verbunden sind, und
mit an den Lichtwellenleiter-Biegesensor angeschlossener Lichtquelle und Lichtempfänger mit Auswerteinrichtung für Lichtdämpfungswerte,
dadurch gekennzeichnet,
daß der Lichtwellenleiter-Biegesensor in Form von mehreren Schleifen angeordnet ist und
daß der Lichtwellenleiter-Biegesensor aus Gradient-Index-Multimode-Lichtwellenleiterabschnitten (GI) und damit verbundenen Step-Index-Multimode-Lichtwellenleiterabschnitten (SI) besteht, wobei die Sensorabschnitte (S) von Gradient-Index-Multimode-Lichtwellenleiter (GI) gebildet sind.

2. Meßeinrichtung nach Anspruch 1,
dadurch gekennzeichnet,
daß jeder bogenförmige Sensorabschnitt (S) von Umlenkungen (11) mit einer einen Biegeradius aufweisenden Außenfläche geführt ist und die Umlenkungen mit den einander zugekehrten Enden (6, 7) der Trägerplatten (2, 3) verbunden sind.

3. Meßeinrichtung nach Anspruch 1 oder 2,
dadurch gekennzeichnet,
daß jede Trägerplatte (2, 3) einen Aufnahmeraum (17, 21) für den Lichtwellenleiter (15) mit Zuführung (16, 20) und Ausführung (27) aufweist,
wobei der Lichtwellenleiter an der Innenwandung des Aufnahmeraumes anliegt.

4. Meßeinrichtung nach Anspruch 3,
dadurch gekennzeichnet,
daß der Aufnahmeraum (17, 21) innere konzentrische Wandungen für innere Schleifen des Lichtwellenleiters (15) aufweist.

5. Meßeinrichtung nach Anspruch 1,
dadurch gekennzeichnet,
daß der Lichtwellenleiter (15) beiderseits der Sensorstrecke (S) an den Trägerplatten (2, 3) befestigt ist.

## Claims

1. A measuring device for monitoring buildings, areas of land or the like,
comprising an optical waveguide bending sensor, which has a multi-mode optical waveguide (GI) and is arranged in the form of a loop,
having a plurality of arcuate sensor sections (S) between support plates (2, 3), which are securely connected with respect to the sensor sections (S) and to areas of buildings or land, and
comprising a light source connected to the optical waveguide bending sensor and light receivers with evaluation means for light attenuation values,
characterised in that
the optical waveguide bending sensor is arranged in the form of a plurality of loops, and
that the optical waveguide bending sensor consists of gradient-index multi-mode optical waveguide sections (GI) and step-index multi-mode optical waveguide sections (SI) connected thereto, the sensor sections (S) being formed by gradient-index multi-mode optical waveguides (GI).

2. A measuring device according to Claim 1,
characterised in that each arcuate sensor section (S) is guided by deflection means (11) with an outer surface which has a bending radius and the deflection means are connected to the ends (6, 7) of the support plates (2, 3) which face each other.

3. A measuring device according to Claim 1 or 2,
characterised in that each support plate (2, 3) has a receiving space (17, 21) for the optical waveguide (15) with input means (16, 20) and output means (27), the optical waveguide lying against the inner wall of the receiving space.

4. A measuring device according to Claim 3,
characterised in that the receiving space (17, 21) has inner concentric walls for inner loops of the optical waveguide (15).

5. A measuring device according to Claim 1,
characterised in that the optical waveguide (15) is fastened to the support plates (2, 3) on either side of the sensor section (S).

## Revendications

1. Dispositif de mesure pour la surveillance de constructions, zones de terrain ou analogues, comprenant un capteur de flexion à guide d'ondes lumineuses qui présente un guide d'ondes lumineuses multimode (GI), qui est agencé en forme d'une boucle et qui présente plusieurs sections (S) de capteur en forme d'arc disposées entre des plaques (2, 3) de support qui, par rapport aux sections (S) de capteur, sont solidement fixées aux constructions ou aux zones de terrain, une source de lumière connectée au capteur de flexion à guide d'ondes lumineuses et un récepteur de lumière comportant un dispositif d'exploitation pour les valeurs d'atténuation de lumière, caractérisé en ce que le capteur de flexion à guide d'ondes lumineuses est agencé sous la forme de plusieurs boucles et en ce que le capteur de flexion à guide d'ondes lumineuses consiste en des sections (GI) de guide d'ondes lumineuses multimode à gradient d'indice et, reliées à celles-ci, en des sections (SI) de guide d'ondes lumineuses multi-mode à indice étagé, les sections de capteur (S) étant formées par des guides (GI) d'ondes lumineuses multi-mode à gradient d'indice.

2. Dispositif de mesure selon la revendication 1, caractérisé en ce que chaque section (S) de capteur en forme d'arc est guidée par des organes de renvoi (11) comprenant une surface externe présentant un rayon de flexion, et en ce que les organes de renvoi sont reliés aux extrémités (6, 7) des plaques de support (2, 3) qui sont en regard l'une de l'autre.

3. Dispositif de mesure selon la revendication 1 ou 2, caractérisé en ce que chaque plaque de support (2, 3) présente un logement (17, 21) pour le guide d'ondes lumineuses (15) avec une entrée (16, 20) et une sortie (27), le guide d'ondes lumineuses étant en application contre la paroi interne du logement.

4. Dispositif de mesure selon la revendication 3, caractérisé en ce que le logement (17, 21) présente des parois internes concentriques pour des boucles internes du guide d'ondes lumineuses (15).

5. Dispositif de mesure selon la revendication 1, caractérisé en ce que le guide d'ondes lumineuses (15) est fixé des deux côtés de la(les) section(s) de capteur aux plaques de support (2, 3).
